# EUROPEAN PATENT SPECIFICATION

(11) **EP 2 969 780 B1**
(45) Date of publication and mention of the grant of the patent: **15.02.2017**
(21) Application number: 14709248.0
(22) Date of filing: 07.03.2014
(51) Int. Cl.: B65B 59/04, B65B 7/16

(54) **APPARATUS FOR THE MECHANIZED REPLACEMENT OF THE SEALING AND CUTTING MODULES IN THE MACHINES FOR THE SEALING OF PRODUCTS IN TRAYS**
VORRICHTUNG FÜR DEN MECHANISIERTEN ERSATZ VON ABDICHTUNGS- UND SCHNEIDEMODULEN IN MASCHINEN ZUM ABDICHTEN VON PRODUKTEN IN SCHALEN
APPAREIL POUR LE REMPLACEMENT MÉCANISÉ DES MODULES D'ÉTANCHÉITÉ ET DE COUPE DANS LES MACHINES POUR LE SCELLEMENT HERMÉTIQUE DE PRODUITS DANS DES PLATEAUX

(30) Priority: 12.03.2013 IT BO20130105
(43) Date of publication of application: 20.01.2016
(73) Proprietor: Gruppo Fabbri Vignola S.p.A., 41058 Vignola (IT)
(72) Inventor: SCHIAVINA, Andrea, I-42015 Correggio Province of Reggio Emilia (IT)
(74) Representative: Porsia, Attilio
(86) International application number: PCT/EP2014/054498
(87) International publication number: WO 2014/139899

(56) References cited:
- EP-A1- 2 520 499
- DE-A1- 3 705 123
- DE-A1-102008 032 306
- DE-A1-102010 009 536
- FR-A1- 2 928 626
- US-A1- 2012 159 898

## Description

The invention relates to the so-called tray sealers, namely to machines that seal with a cover film pans or trays filled with a product to be packaged, such as a food product. In particular the invention finds application in the sealing station of these machines, usually provided with a lower horizontal mold, provided with compartments open upwards wherein pliers insert and set in support, with their peripheral edge, trays filled with a product and provided with an upper and opposed mold to the previous one, under which passes a film of thermoplastic material coming from a feed reel arranged above and in correspondence to one end of said upper mold and connected to a collecting take-up reel also arranged above and in correspondence to the other end of the same upper mold, inside which the heat-sealing and cutting means are arranged, which after the rising of the lower mold, respectively close each tray by heat-sealing on its peripheral edge a portion of the interposed film and then cut around the perimeter and outside of the sealing said closing film portion, to separate it from the continuous film, so that when the lower mold lowers, the trays closed with the heat-sealed film remain therein, that by way of extractors are arranged in a raised position for the gripping by way of a part of said pliers that, while performing said feeding step of new trays to be closed, transfer the sealed trays from the sealing station in a subsequent unloading station. The waste of the film portion arranged under the upper mold, is cyclically advanced so as to be moved away towards the downstream collecting means and to be replaced by a new portion of intact film coming from the upstream supply means.

The tray sealers are typically arranged to operate cyclically on assemblies of trays formed by many trays arranged on a row or on two or more parallel rows. The technical problems that occur most frequently in these machines, are due to the necessity of having to replace the cutting means or the electrical resistances of the upper cutting and sealing means and to simplify the resolution of these problems, the tendency is to arrange the cutting and sealing assemblies as modules, to be mounted removably on a single hooking plate associated with the upper mold and which carries the electrical systems, so that in case of a malfunctioning module it can be replaced quickly without having to move the other sealing and cutting modules. This same trend also facilitates the so-called format-change operations of the tray sealers, involving replacement of the cutting and sealing modules to vary the size of the trays to be sealed.

As state of the prior art, we mention the Japanese patent JP 3743880 B2 with priority date July 10, 2000 and the publication of the patent application U.S. 2011/0072764A1 deposited in September 28, 2010. In this latter prior art is described how the sealing and cutting modules are provided with handles so as to be easily assembled and disassembled, and how their electric power supply and control cables are connected to an outlet arranged laterally to the modules upper hooking structure in order to facilitate maintenance. This document does not describe how the modules are fixed to said upper support structure. From the observation of an advertising catalog taken from Internet, the machine IN50 of the American firm ROSS, holder of the patent application U.S. 2011/0072764A1, it seems that the sealing and cutting modules are mounted on the support structure having a drawer-like solution, with the ability of sliding on horizontal guides and perpendicular to the advancement direction of the trays, and then with the possibility of engaging and extraction from one or both sides of the machine. In this same prior solution, the replacement of the cutting and sealing modules must be done manually, with considerable loss of time for releasing and mechanically re-fixing the modules, for opening and closing the electrical connections and allowing first a sufficient cooling of the module to be replaced in order to avoid dangerous burns to the maintenance personnel. This same solution cannot be applied on sealing and cutting assemblies acting on more than two rows of trays, as for accessing the modules of the inner rows the modules of the external rows should be removed. It is then evident how this same solution requires wide free space on the sides of the machine, in order to perform said drawer-like engagement and extraction operations of the sealing and cutting modules.

DE 10 2008 032306 A1 discloses an apparatus according to the preamble of claim 1.

The invention provides to obviate the limitations and the drawbacks of the known art, with the solution described in the annexed claim 1 and subsequent dependent claims, which exploits the following solution idea. The sealing and cutting modules are provided with mechanical engaging means which presuppose a vertical movement of the modules themselves and each module is provided with a vertical electric plug which engages in a corresponding electrical vertical outlet arranged on the modules upper hooking plate, to achieve the necessary electrical connection of the removable electrical power and signal systems. To disassemble a cutting and sealing module, a forced orientation in the seat of the lower mold is arranged which would receive the tray and which is aligned vertically with the module to be replaced, a template, all or in part of insulating plastic material, provided with comfortable side handles and having a shape complementary to the bottom one of the cutting and sealing module to be replaced and when said template is lifted up with the rising of the lower mold, the same template is available under the module to be replaced and with means associated thereto, releases the module from the upper support plate, so that the module is arranged in a centered support on the template which is then sent down and is removed with the module to be changed, which may also be hot as the template is in thermo-insulating material and can be safely grasped, even with bare hands by way of its side handles. During the release of the mechanical hooking means of the module to the upper support plate and during the next downward stroke of the lower mold, the electrical plug of the module slips off automatically from the upper outlet, therefore the whole operation of extraction of the module can be mechanized and can be performed quickly and safely. For the hooking of a new cutting and sealing module, this is arranged with a forced orientation on a support template, which is mountable with forced guidance too in the empty seat of the lower mold, which is then raised to hook the module to the upper hooking plate and to engage its corresponding plug in the electric outlet of the same upper hooking plate.

Further characteristics of the invention and the advantages deriving therefrom, will appear more evident from the following description of a preferred embodiment thereof, illustrated purely by way of non-limiting example, in the figures of the six attached drawing sheets, wherein:
- Fig. 1 shows in perspective and from above a cutting and sealing module according to the invention;
- Fig. 2 shows in perspective from above a portion of the module support and hooking plate of Figure 1, with one of said modules mounted;
- Fig. 3 shows other details of the assembly of Figure 2 sectioned along the line III-III;
- Fig. 4 shows with mild lateral perspective and from above, the template used for the release of a cutting and sealing module;
- Fig. 5 shows the two molds of the machine arranged to operate on two tray rows sectioned along the line V-V of Figure 2, with a template arranged in a compartment of the lower mold shown in the low resting position;
- Fig. 6 shows in perspective and from above the same means of Figure 5, limitative to a cutting and sealing module and at the end of the rising stroke of the lower mold;
- Fig. 7 shows the same means of Figure 6 sectioned along the line VII-VII;
- Fig. 8 shows the same means of Figure 7 in the lowering step of the lower mold with the template and with the cutting and sealing module released from the upper mold hooking plate;
- Fig. 9 shows the same means of Figure 8 in the next hooking step of a new cutting and sealing module on the upper mold hooking plate;
- Figs. 10 and 11 show enlarged details of the hooking system of the cutting and sealing module, shown respectively in the engaging condition as indicated by broken lines in Figure 9 and after the engaging step, when the module is supported by the upper hooking plate;
- Fig. 12 shows the electrical plug of each module transversely sectioned, engaged in the respective plug of the hooking plate, when said plate touches the module as in the condition of Figure 10.

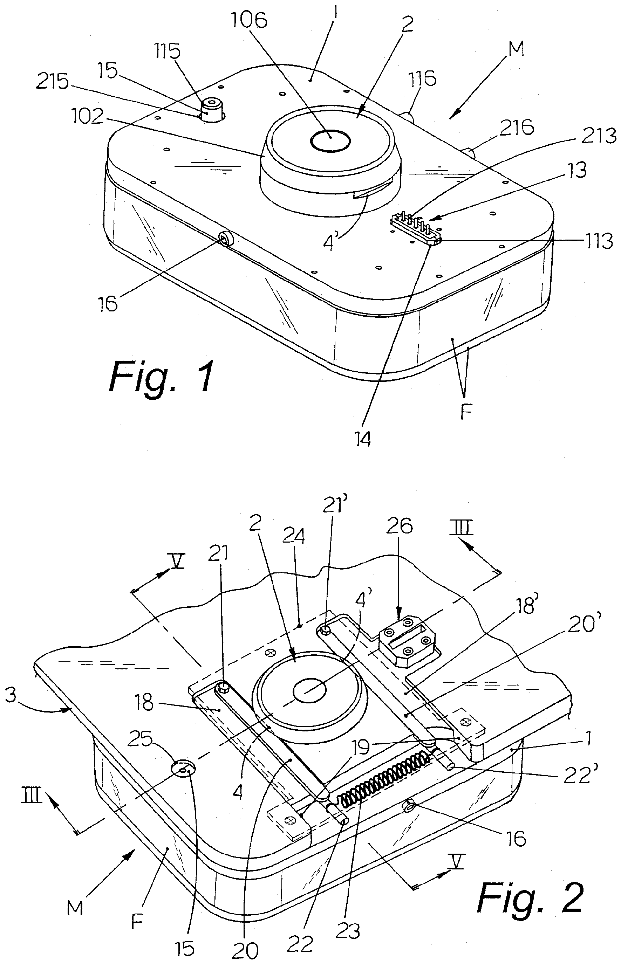

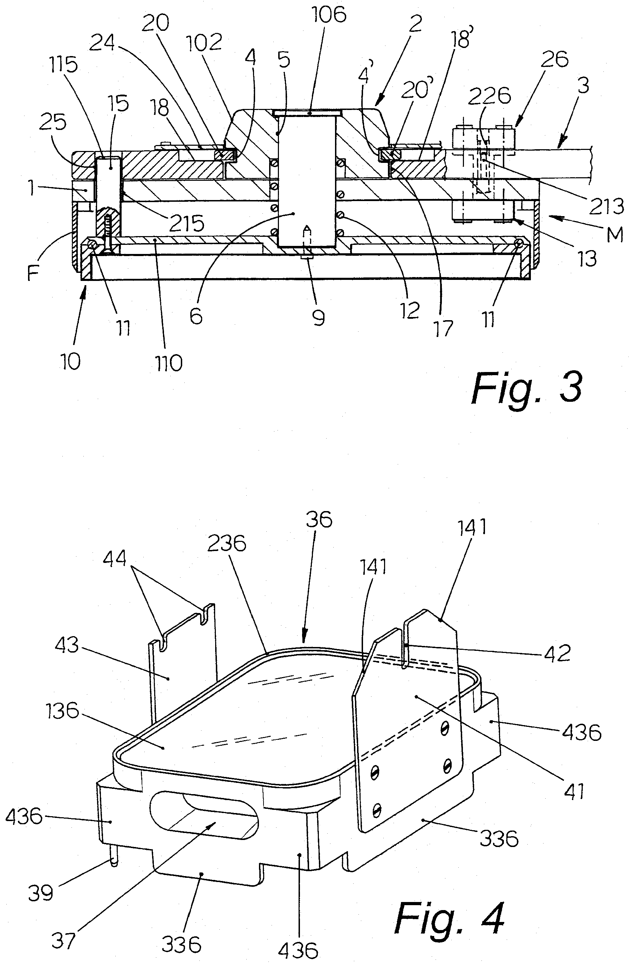

With reference to Figures 1 to 3 it is noted that each sealing module M comprises an upper plate 1 with a plan shape correlated to that of the die F for the perimetral cutting of the sealing lid of the trays by the sealing machine that engages said module M and at the center of the plate 1 is superiorly integral and protrudes perpendicularly therefrom, a shank 2 of cylindrical shape, with a round base, with height greater than the thickness of the hooking plate 3 of the module M (see below), which ends with a frustoconical head 102 and with flared edges and which is laterally provided, in opposite positions and with parallel orientation to two sides of the module, for example the shorter sides, with rectilinear grooves 4, 4' of equal size and equally spaced from the underlying plate 1. Seen transversely and in the median area, the grooves 4, 4' have a U section and their parallel sides are perpendicular to the axis of the shank 2. The free edges of the grooves 4, 4' are suitably bevelled. As illustrated in detail in Figure 3, the shank 2 is provided axially with a guide seat 5 in which a spark plug 6 axially slides having a bearing head 106 on said shank 2 and that with the lower end is removably fixed with suitable means 9, to the central part of the plate 110 that carries the sealing frame 10 oriented downward and heated by the electric resistance 11. A counteracting spring 12 strikes the spark plug 6, reacting on the upper part against a seat of the shank 2 and with the lower end acting on the plate 110 to maintain the sealer 10 in the low resting position.

To the sealer 10 is usually associated at least one temperature control sensor, not shown in the drawings, therefore for piloting the electric module M is necessary to provide within the same a small electrical circuit formed by five wires: two power wires for the power supply of the electric resistance 11; two signal wires connected to said temperature sensor and one grounding wire. These five wires are connected on the other end to a penta-polar plug 13 that with its own insulating body 113 protrudes in part from a window 14 obtained on the plate 1 (Fig. 1) and that brings its own five metal plugs 213 protruding from said insulating body, oriented upward and perpendicular to the plate 1 (see below).

From Figure 1 it is noted that the cutting and sealing module M carries fixed perpendicularly on the support plate 110 of the sealer 10, a pin 15 with countersunk head 115, which passes through a slot 215 of the plate 1 and protrudes from the latter for a right segment, both to avoid the rotation of the sealing assembly around the axis of the spark plug 6, and for other anti-rotation purposes mentioned later. On the side surface of the plate 1, for example on the edges of the long sides of the latter, protruding references have been arranged made for example by the cylindrical head of the screws arranged for example one in the middle of one side, as indicated with 16 and two on the opposite side, with symmetric arrangement, as indicated with 116 and 216. It is understood that these references can be differently formed by piece parts of the plate 1.

With reference to Figures 2 and 3 it is noted that the plate 3 to which the modules M are hooked underneath, for each module is provided with a cylindrical hole and with round section 17, of a diameter such as to be crossed with good accuracy by the cylindrical shank 2 of the module M and whose edges are properly rounded. Once the shank 2 is engaged in the hole 17, the side grooves 4, 4' of the same shank protrude from the upper face of the plate 3 where gripping means are provided that readily engage into said grooves to retain the module M hooked to the same plate 3. For this purpose, on the upper face of the plate 3, on one side and on the other side of the hole 17 small seats 18, 18' are formed by material removal, parallel to each other and to the grooves 4, 4' of the shank 2, which end in a recess 19 provided on one side of the plate 3 and said seats 18, 18' have a depth slightly greater than the thickness of flat levers 20, 20' pivoted with one of their ends in 21, 21' within the same seats 18, 18' and which extend up to protrude with the other end from the same side recess 19 of the plate 3, where they present integral lower cylindrical extensions 22, 22' and where the same levers 20, 20' are interconnected by a traction spring with cylindrical helix 23 which causes said levers 20, 20' to engage the grooves 4, 4' of the shank 2 and to retain the module M hooked to the plate 3. Even the spring 23 is housed without interference in said recess 19. In the hooking position of the module M, as well as in the resting position, when the shank 2 is not engaged in the hole 17, the levers 20, 20' are maintained by the spring 23 bearing against the inner side of their seats 18, 18' and with a portion of their inner sides protrude inside the hole 17, so that when in said hole the shank 2 is engaged and raised, the tapered end 102 of said shank can progressively enter between said levers 20, 20' and widen them, until they cooperate with the cylindrical portion of the shank 2 and when the grooves 4, 4' thereof reach the height of the levers 20, 20', these come to snap into the same grooves 4, 4' and firmly engage the module M to the support plate 3 (see below). To avoid unwanted bending and bending-torsion stress on the levers 20, 20' when these cooperate by sliding with the shank 2, the seats 18, 18' are closed by a small plate 24 fixed, for example by screws on the upper face of the plate 3, as shown in continuous lines in Figure 3 and in broken lines in Figure 2.

Always in Figure 2 it is noted that the hooking plate 3 is provided in a pre-fixed position, with a hole 25 with flared edges, which houses the protruding segment of said pin 15 of the sealing module M to prevent the latter from rotating on the coupling formed by the shank 2 and the hole 17 that houses it. For the cooperation between these same parts 15 and 25, the module M assumes a forced and predetermined position on the plate 3, useful for the correct cooperation of the same module M with the seat carrying the tray in the lower mold of the sealing machine. Also for the mutual cooperation with said parts 15, 25, the module M is arranged with its own side reference 16 (Fig. 1) in alignment with the centerline of said recess 19 of the hooking plate 3.

The hooking plate 3 is finally provided with an electrical penta-polar outlet 26, whose insulating body 126 protrudes downward from a window 27 of the same plate 3 and carries the contact metal bushings 226 open downward and in the vertical alignment position, useful for the coupling with the pins 213 of the electrical plug 13 of the sealing and cutting module M as shown in Figure 1. With 28 is indicated the bundle of electric wires connected to the outlet 26 and in abutment against the electrical panel (not shown) for powering and controlling the sealing assembly 10 of the various modules M hooked to the plate 3.

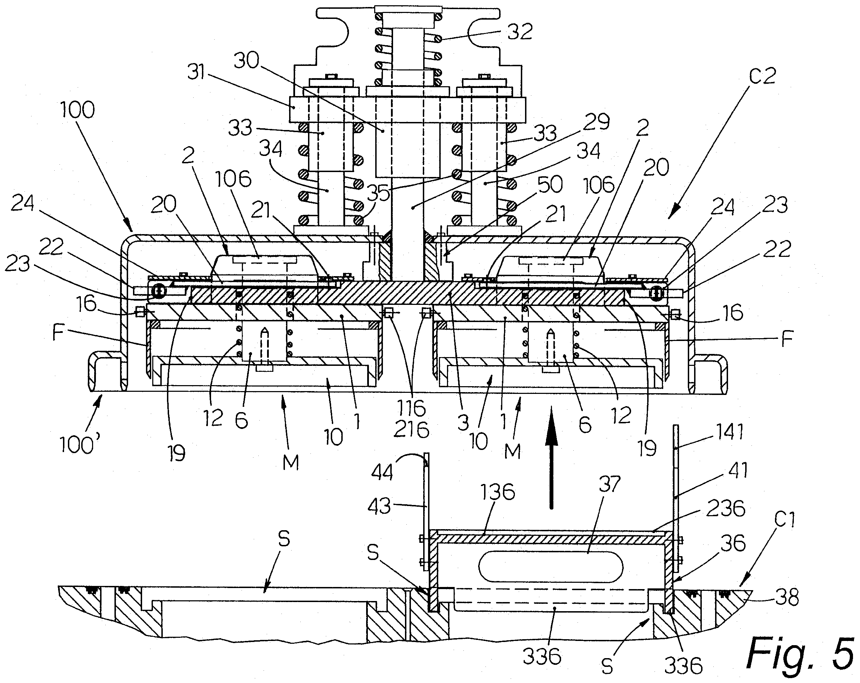

With reference to Figures 4 and 5 is now described the equipment to be used and the respective method of use to disengage from the hooking plate 3 a defective sealing module M. In figure 5 is indicated with C1 the lower mold with the seats S that in operating machine house each a tray to be sealed. The mold C1 is initially in the low resting position and away from the overlying mold C2 of a distance such that on the same mold C1 the equipment that is described below with reference to Figure 4 can be arranged easily. In the upper mold C2 a plate 3 for hooking the modules M is housed provided in number of one for each said lower seat S, which are illustrated here in the resting position, with the sealer 10 protruding below the cutting die F. Figure 5 shows, purely by way of example, how the hooking plate 3 is supported by medians spark plugs 29 sliding in the guide bushings 30 fixed on a support structure 31 and from these bushings said spark plugs 29 protrude upwards with a segment pushed upwards by a contrast spring 32. On the same support structure 31 are arranged in a position equidistant from the bushings 30, additional bushings 33 for the sliding of the spark plugs 34 fixed to the bell 100 of the upper mold C2 and pushed downwards by counteracting springs 35. In the rest position, the hooking plate 3 bears against the spacers 50 integral with the bell 100 of the mold and C2 and appears evident that there is a sufficient clearance between the upper end of the hooking shanks 2 of the modules M and the same bell 100 whose lower perimeter with a channel-profile 100' is arranged below the sealing and cutting 10 assemblies of the same modules M.

Have not been illustrated in Figure 5 the means that on command push downwards the plate 3 with the modules M to perform the cutting and sealing step of the trays lids, as it is not necessary for the understanding of the invention which is expected to operate on the upper bell C2 at rest conditions.

The equipment to be used for the purposes in question, is illustrated in Figure 4 and comprises a template 36 having the shape of a parallelepiped box and inverted, made with any thermo-setting plastic material, provided with a flat upper wall 136 on which is intended to rest the lower part of the module M and peripherally surrounded by a relief edge 236 for containing the same module M, provided with comfortable grip handles 37 on the short sides, with downward extensions 336 of its side walls, with which it engages the perimeter of the seat S of the lower mold C1 to properly center therein the template 36 which with its corner portions 436 rests on the upper face of the plate 38 with the seats S, that in this way takes over the mechanical support function of the same template 36. On one of said corner portions 436 of the template 36 a projecting vertical peg 39 is provided which must enter into a hole 40 provided only on one of the portions with which the plate 38 supports the corner areas of the template 36, so that the latter will result arranged on the lower mold C1 with a forced orientation and such that a plate 41 with which the template 36 is laterally provided on the half of one of its long sides, which extends above the peak 136, 236 of the template and that carries in the upper part of the oblique sides 141 and a median slit 42, appears below and in vertical alignment with the recess 19 (fig. 2) of the hooking plate 3 and with the side reference 16 of the module M arranged therein. On half of the other long side, in opposition and parallel to the plate 41, the template 36 carries a rectangular and protruding plate 43, of a height less than that of the plate 41 and provided at the top with a pair of slits 44 which are in vertical alignment with the pair of side references 116, 216 with which the module M is provided (Fig. 1).

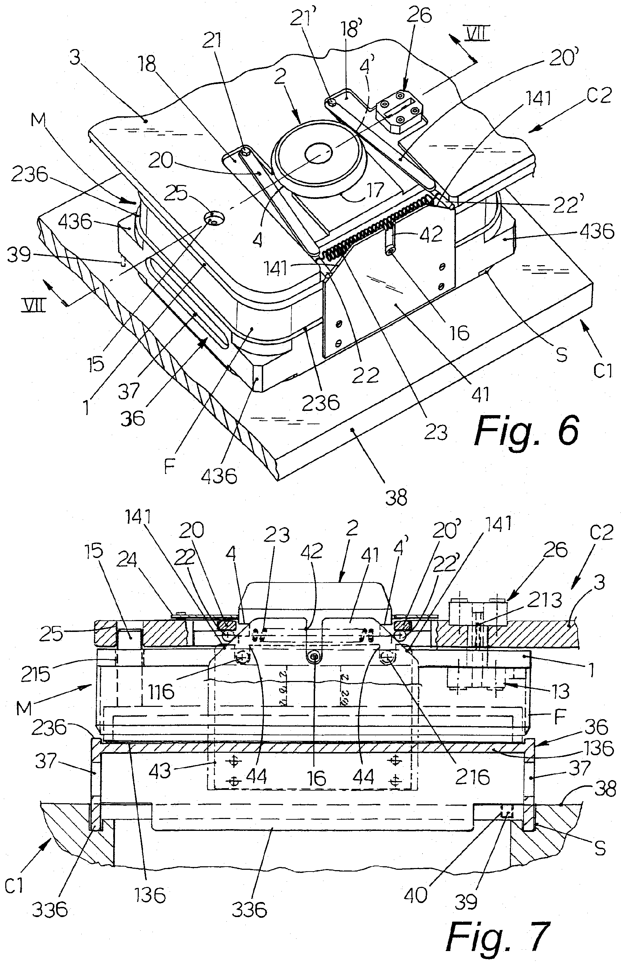

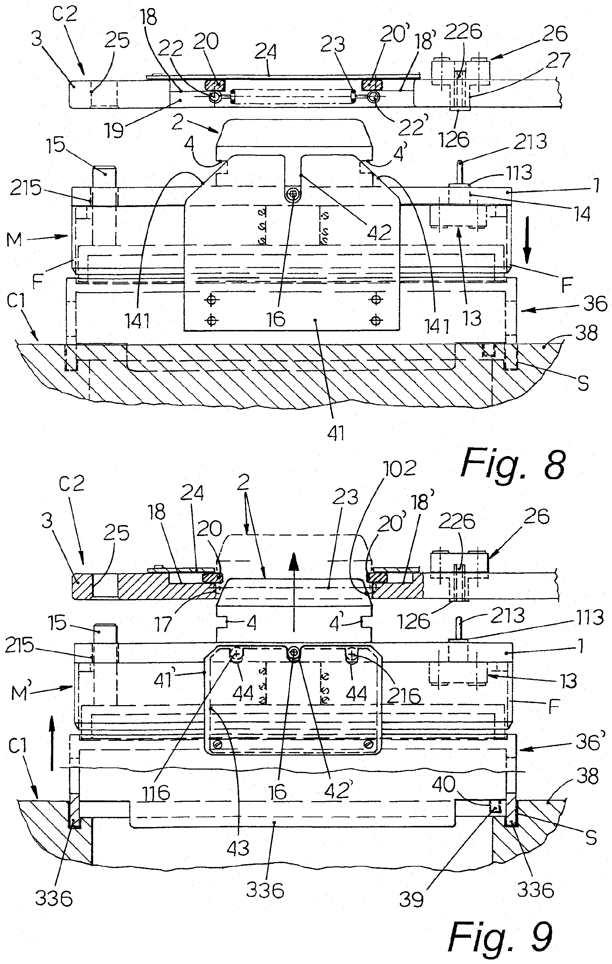

After mounting the template 36 in a seat S of the lower mold C1, as mentioned earlier with reference to Figure 5, the rising of the same mold C1 is controlled with a preset stroke towards the upper mold C2 which remains stationary and the end of this rising stroke is illustrated in Figure 6, from which is detected how the side references 116, 216 of the module M are engaged into the slits 44 of the plate 43, how the side reference 16 of the same module M is engaged in the slit 42 of the plate 41 and how, before these references touch the bottom of said slits and before the sealing assembly 10 touches the peak 136 of the template 36, the oblique sides 141 of the same plate 41 cooperate with the end extensions 22, 22' of the levers 20, 20', by spreading said levers and extracting them from the side slots 4, 4' of the shank 2 of the module M, with the result that said module is released by gravity from the hooking plate 3 and under the guide of the side plates 41, 43 falls on the nearest upper wall 136, 236 of the template 36 that takes over in the supporting the module, while the slots 4, 4' are arranged below the levers 20, 20' still in the open position, as shown in Figure 7. When the lower mold C1 is lowered, as shown in Figure 8, while the oblique sides 141 of the plate 41 leave the ends 22, 22' of the levers 20, 20' and these latter are close up again, the inner sides of said levers are to cooperate with the upper cylindrical part and then with the conical head 102 of the shank 2, finally abandoning the module M that descends with the lower mold C1, resting and in the correct centering position on the template 36. While the template 36 is lowered and moves away from the hooking plate 3, also the electrical contacts of the plug 13 detach from the bushings of the outlet 26 of the same plate 3, thanks to the weight of the module M that is much greater than the frictional resistance that the plug meets by detaching from said outlet. When the mold C1 has reached the end of the lowering stroke, it is easy and safe for the operator, to grasp the template 36 by the handles 37 and remove this component with the module M from the seat S for freeing it and have it ready for the next mounting step of a new cutting and sealing module M'. Even if the extract module M is warm, the thermo-insulating nature of the template 36 makes the handling of the ensemble extremely safe.

The engaging step of a new module M' on the hooking plate 3, is an operation which is also very simple and rapid, which involves the provision in the empty seat S of the lower mold C1, of a template 36' as from Figure 9, which differs from the 36 used for the releasing, for the fact that the previous plate 41 (fig. 4) is replaced by a plate 41' of much lower height, devoid of the upper oblique sides since this plate 41' must not cooperate with the ends 22, 22' of the hooking levers 20, 20' and provided with a short central slot 42' adapted to cooperate with the side reference 16 of the new module M'. The plate opposite to that 41', indicated in Figure 9 by broken lines, is quite equal to that of 43 and is provided with two upper slots 44 for the cooperation with the side references 116, 216 of the module M' that for the cooperation effect with these plates is correctly oriented with respect to the holes 17, 25 and to the electric outlet 26 of the hooking plate 3. Once the new template 36' with the new module M', correctly oriented, is successfully mounted and oriented in the seat S of the mold C1, the rising of the same lower mold C1 is controlled with a preset stroke that causes the shank 2 to enter in the hole 17, to spread the levers 20, 20' which then snap hook in the side grooves 4, 4' of the same shank 2 and that causes the plug 13 of the same module M' to engage in the outlet 26 of the plate 3. When the lower mold C1 is taken back into the low position, the new module M' remains hooked to the plate 3 and, after removing the template 36' from the seat S, the machine is ready to be put back into tension and to return operative. It is obvious that in the release and hook steps described of a module M, M' from and to the plate 3, the outlet 26 is not under tension. It is also evident that the described operations of orientation of the template, of orientation of the module with respect to the template itself and of opening and closing of the levers 20, 20' for the releasing and hooking steps of the modules M, M', if desired, may be easily controlled and monitored with electrical sensors or electric micro-switches easily arrangeable and connectable by experts in the field, to ensure that in the event of non-compliance with the orientation protocol of the template 36, 36' on the lower mold C1 and/or of the module M, M' on the same template, the movement of the lower mold is automatically stopped and acoustic and/or visual signals are activated to indicate the type of incident that occurred. All this leads to the substitution operation of one sealing and cutting mold in a tray sealer becomes of such simplicity that can be safely performed even by non-qualified personnel, with the great economic benefits that this entails.

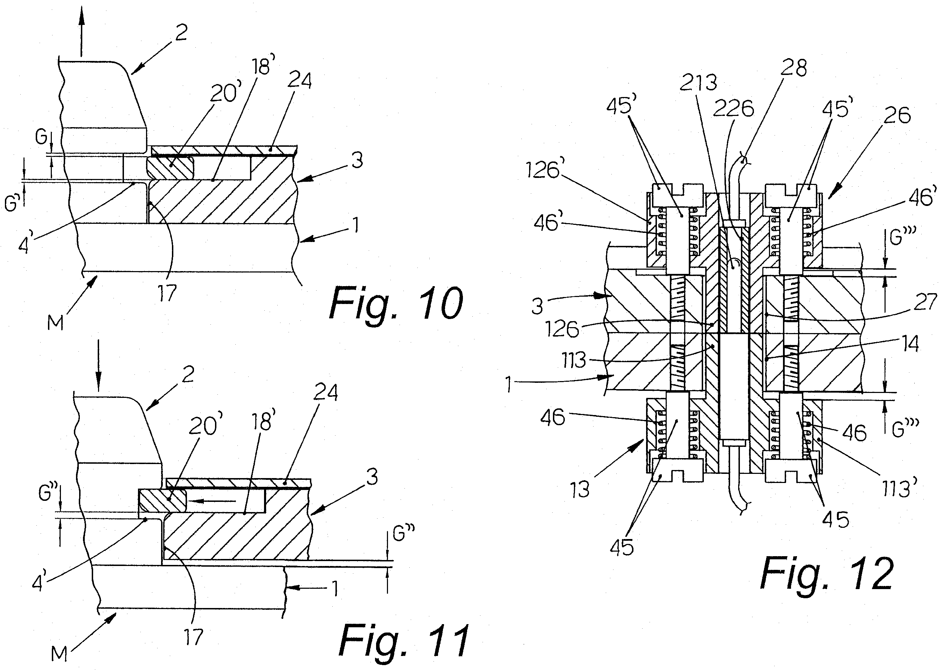

In figure 10 is shown enlarged a side of the shank 2 of a module M at the end of the rising stroke for the hooking of the plate 3 to the upper mold C2. In this step, the upper face of the plate 1 of the module M abuts against the lower face of the plate 3 and the grooves 4, 4' of the shank 2 are aligned with the levers 20, 20' and since the height dimension of each groove 4, 4' is slightly greater than the thickness of each said lever, and because small clearances G, G' are formed above and below said parts, the levers 20, 20' enter without resistance and with safety in the grooves 4, 4' and when the lower mold is lowered, the module M moves to the condition of Figure 11, with the upper face of the grooves 4, 4' resting on the levers 20, 20' which take over in supporting the shank 2 and the module M whose upper plate 1 moves away from the lower face of the support plate 3 with a clearance G" of small entity, related to the abovementioned clearances G, G'. It follows that when the cutting and sealing module works by way of thrust on the tray for sealing the cover thereon, the plate 1 of said module comes in contact with the plate 3, as mentioned with reference to Figure 10. These small oscillations of the modules M with respect to the hooking plate 3 allow that if the plug 13 and the outlet 26 were fixed to the respective plates 1 and 3, the same would be cyclically subjected to a small movement towards and away one with respect to the other, with possible formation of wear in the electric contacts and with the dangers that would follow. The invention intends to overcome this drawback, leaving the small clearances previously mentioned, that simplify the hooking and releasing operations, and by mounting the plug and the electrical outlet on respective support plates, with a floating solution, as is now described with reference to Figure 12. From said figure it is noted that the plug 13 and the outlet 26 are provided with respective base swellings 113' and 126' of their insulating body, arranged respectively below the plate 1 and above the plate 3, having a substantially rectangular shape in plan, provided in the corner areas with holes for the passage of the shank of respective screws 45, 45' screwed in holes of the respective plates 1 and 3 and having a length greater than the thickness of said bases 113' and 126' so to fulfill a sufficient approaching and spacing displacement with respect to the respective plates 1, 3. The holes for the passage of said screws 45, 45' are provided with respective widenings open towards the head of the same screws and in said widenings springs 46, 46' are housed which push the same bases 113' and 126' into contact with the plates 1, 3, to determine a sufficient projection from the windows 14 and 27 of the insulating body 113, 126 of the plug 13 and of the outlet 26. From the above it follows that when the plate 1 of the module is raised into contact with the hooking plate 3, as shown in Figure 12, because the thrust force of the springs 46, 46' is greater than the engaging friction of the plugs 213 in the bushings 226, these components are immediately coupled to each other and at the end of the engaging stroke, the protruding portions of the insulating bodies 113, 126 touch each other and move away their bases 113' and 126' from the respective plates 1, 3, forming a clearance G'" which has for example, approximately, the value of the clearance G" of Figure 11, so that when said clearance is formed between the plates 1 and 3 during the operating cycles of the sealing and cutting modules M, the insulating parts 113, 126 of the body of the outlet and plug assembly 13, 26 move through respective apertures 14, 27 but remain always in contact with each other and the plugs 213 are always fitted and axially blocked into the plug bushings 226, avoiding relative sliding and the previously mentioned drawbacks. It is obvious that the context of the invention also comprises the variant embodiment which envisages that the springing of only one of the insulating bodies of the outlet or of the plug, even if the solution shown is to be considered preferable in that the movements and the stresses are distributed on the two units, ensuring a lower stressing and a longer life of the system. A further variant may refer to the placement inversion of the plug 13 and of the outlet 26 and/or to a different orientation of these components with respect to what illustrated in the drawings.

It is understood that the description refers to a simple, reliable and preferred embodiment of the invention, to which numerous variations and constructive modifications can be made, all of which without abandoning the guiding principle of the invention, as described, illustrated and as claimed below. In the claims, the references between brackets are purely indicative and do not limit the protection scope of the claims.

## Claims

1. An apparatus for the mechanized replacement of the sealing and cutting modules (M) in the sealing station of machines for the packaging of products in trays, with said apparatus comprising a lower mold (C1) with seats (S) for the support of the edges of the trays with product and that by way of motion means is cyclically raised and lowered vertically with respect to an upper mold (C2) which supports in the lower part said modules (M) by way of hooking and releasing means so that said modules (M) can be removed and replaced in a selective manner, wherein said hooking and releasing means of the modules (M) are provided between the upper plate (1) of each module (M) and the respective hooking plate (3) of the upper mold (C2), with complementary mechanical engaging means (2, 17) of such a kind and oriented so as to be coupled and uncoupled individually and/or simultaneously, imparting to each said module (M) an approaching and separating vertical movement with respect to said hooking plate (3) of the upper mold (C2),
**characterized in that**:
- each said module (M) is provided at the top and perpendicularly to an own upper plate (1) of a component such as male (2) of at least one mechanical engaging whose component (17), complementary and for example female, is provided on a hooking plate (3) of said upper mold (C2) which carries hooked underneath the various modules (M), being provided of forced orientation means (15, 25) for properly orienting said modules (M) with respect to the hooking plate and to said molds (C1, C2);
- said upper plate (1) of each module (M) and said hooking plate (3) carry complementary parts (13, 26) of multi-polar electric coupling, of the plug and outlet type, perpendicular to said plates (1, 3) and connected to the power supply and electric control means of the sealing unit (10, 11) of each module (M);
- some locking and unlocking means (20, 20', 22, 22', 23) are provided on at least one of said plates (1, 3) to cooperate with said complementary mechanical engaging parts (2, 17);
- a template (36, 36') is finally provided to be mounted with the forced orientation means, in one of the empty seats (S) of the lower mold (C1) and said template is provided with means for effecting the hooking or the release of a module (M) to or from said hooking plate (3) and is provided with means for activating or deactivating said locking and unlocking means (20, 20', 22, 22', 23), using the rising and lowering movement of the lower mold (C1) with said template (36, 36'),
and wherein:
the upper plate (1) of each module (M) carries integral on the upper part and perpendicularly, a shank (2) of cylindrical shape, with round base, which ends with a frustum conical head (102) and with rounded edges and which is laterally provided, at opposite positions, with rectilinear grooves (4, 4'), being provided that the hooking plate (3) is provided for each module with a hole (17) of diameter such to be crossed with good accuracy by said cylindrical shank (2) of the module (M) and such that, at successful entry of the shank (2) into the hole (17), the side grooves (4, 4') of the same shank would protrude from the upper face of the hooking plate (3) on which levers are pivoted (20, 20') guided by means (18, 18', 24) and urged in the closing by a spring (23) which leads said levers to protrude with a part of their inner sides, within said hole (17), so that when in said hole said shank (2) of the module (M) is engaged and raised, the tapered end (102) of said shank would progressively enter between said levers (20, 20') separating them until bringing them to cooperate with the cylindrical part of the same shank (2) and when the side grooves (4, 4') of said shank reach the height of the levers (20, 20'), the latter snap enter in said grooves (4, 4') firmly fixing the module (M) under the hooking plate (3).

2. The apparatus according to claim 1), provided with electric power and signal circuits connected to the sealing unit (10, 11) of each module (M), which in conjunction with the replacement of each module (M) must be opened and closed, **characterized in that** said circuits abut against supplementary electric coupling means (13, 26), vertically oriented and also arranged on the upper plate (1) of the modules (M) and on said hooking plate (3), all in such a way that while the hooking and releasing operations of a module (M) are carried out simultaneously the operations of closing and opening of said electric circuits are carried out as well, and so that all of these operations can be easily unified mechanized and automated, using the lower mold (C1) and the respective rising and lowering means.

3. The apparatus according to claim 1, wherein inside said mechanical engaging shank (2) guide means (5-9) are provided as well as the counteracting spring (12) for the sealing assembly (10, 11) of each module (M) and on the plate (110) of said sealing assembly is integral perpendicularly an anti-rotation pin (15) which passes through a slot (215) provided on the upper plate (1) of the module (M) and which protrudes perpendicularly from the latter to be able to removably engage in a corresponding seat (25) of the hooking plate (3) to prevent also the rotation of each module (M) around the axis of the mechanical engaging (2, 17, 20, 20') that fixes the module itself to the hooking plate (3).

4. The apparatus according to claim 1, wherein said template (36, 36') has the shape of a parallelepiped and inverted box, made with any thermosetting plastic material, provided with a flat upper wall (136) on which it is intended to rest the lower part of a module (M) and peripherally surrounded by an edge in relief (236) for containing the same module (M), being the same template provided with comfortable side gripping handles (37), being provided with downward extensions (336) of its own side walls, with which it engages the perimeter of the seat (S) of the lower mold (C1) for properly centering therein the same template (36) which with own corner portions (436) rests on the upper face of the plate (38) with the seats (S) of the lower mold (C1), which in this way takes over the mechanical support function of the template (36, 36'), being provided on one of said corner portions (436) of the template a projecting vertical pin (39) which engages a hole (40) provided only on one of the portions with which said plate (38) supports the corner areas of the same template (36), so that the latter results arranged on the lower mold (C1) with a forced and useful orientation for properly cooperating with a module (M) both in the hooking step and in the releasing one to or from said hooking plate (3) of the upper mold (C2).

5. The apparatus according to claim 4, wherein the template (36, 36') is provided laterally, for example on the half of one of its sides, with a first plate (41, 41') which extends above the peak (136, 236) of the same template and that carries open on the upper part a vertical and median slit (42, 42') in which a side reference (16) of the module (M) is inserted to be hooked or released, being provided that in opposed and parallel to said first plate (41, 41'), the template (36, 36') carries laterally fixed a second rectangular and projecting plate (43) which carries two upwardly open slits (44) in which a corresponding pair of side references (116, 216) of the same module (M) are engaged which in this way is properly oriented with respect to the template (36, 36') and with respect to the hooking plate (3) of the upper mold (C2).

6. The apparatus according to claim 5, wherein the template (36) used for releasing a module (M) has the first side plate (41) higher than said second plate (43) and the same first plate is provided at the top with oblique sides (141) adapted to cooperate with end extensions (22, 22') of said levers (20, 20') operating on the hooking plate (3) for locking the mechanical engaging (2, 17) of each module, to determine the mutual separation of said levers (20, 20') in contrast with the action of the respective closing spring (23), with the resulting output of said levers from the side slots (4, 4') of the shank (2) of the module and the consequent releasing of the same module (M) that by falling on the near peak (136) of the template (36), lowers said slots (4, 4') so that when the lower mold (C1) with the template comes down with the released module (M) and said levers (20, 20') gradually close, said levers slide on the cylindrical portion and then on the conical portion (102) of the shank, returning to the projecting position within the hole (17) of the hooking plate (3), useful for the snap cooperation with the new module (M') to be hooked.

7. The apparatus according to one or more of the preceding claims, **characterized by** comprising sensors or micro-switches and a respective electric and/or electronic circuit to ensure that in the event of non-compliance with the orientation protocol of the template (36, 36') on the lower mold (C1) and of the module (M, M') on the same template, the movement of the lower mold (C2) is automatically stopped and acoustic and/or visual signals are activated to indicate the type of malfunction occurred.

8. The apparatus according to claim 2, wherein the plug (13) and the outlet (26) of said vertical electric coupling are provided with respective insulating bodies (113, 126) that cross the respective vertical windows (14, 27) provided on the upper plate (1) of the module (M) and on the hooking plate (3) and said insulating bodies (113, 126) are provided with respective base widening (113', 126') which are respectively maintained abutting under the upper plate (1) and above said hooking plate (3), by driving screws (45, 45') and by respective counteracting springs (46, 46') whose thrust force is greater than the coupling friction of the electric coupling (13, 26) in question, the whole in such a way that when the upper plate (1) of a module (M) is raised against the hooking plate (3), the plugs (213) fit into the corresponding bushings (226) of the electric coupling and the protruding parts of the insulating bodies (113, 126) of said coupling touch each other and push away their bases (113', 126') from the plates (1, 3), forming a clearance (G"') of a width such as to compensate for the clearance (G") that is formed between the same plates (1, 3) during the work cycle of the module (M) and which derives from the clearances (G, G') existing between said hooking levers (20, 20') and the corresponding slots (4, 4') of the shank (2) engaged by said levers, so that during the same working cycle of the module (M) said insulating bodies (113, 126) move through respective apertures (14, 27) remaining always in contact one with the other, with no relative axial movements between the plugs (213) and the respective outlet bushings (226).

## Patentansprüche

1. Eine Vorrichtung für den mechanisierten Ersatz von Abdichtungs- und Schneidemodulen (M) in der Abdichtungsstation von Maschinen zum Verpacken von Produkten in Schalen, wobei die genannte Vorrichtung eine untere Form (C1) mit Sitzen (S) für die Halterung der Kanten der Schalen mit dem Produkt umfasst, und die durch entsprechende Bewegungselemente zyklisch senkrecht im Verhältnis zu einer oberen Form (C2) angehoben und gesenkt wird, welche im unteren Bereich die genannten Module (M) mit Hilfe entsprechender Einhakungs- und Freigabeelemente trägt, so dass die genannten Module (M) jeweils selektiv entfernt und ersetzt werden können, wobei die genannten Einhakungs- und Freigabeelemente der Module (M) zwischen der oberen Platte (1) jedes Moduls (M) und der entsprechenden Einhakungsplatte (3) der oberen Form (C2) jeweils mit zusätzlichen mechanischen Einrastelementen (2, 17) ausgerüstet sind, welche so beschaffen und so ausgerichtet sind, dass sie jeweils einzeln und/oder gleichzeitig ein- und ausgekuppelt werden können, und dabei jedem der der genannten Module (M) eine in Bezug auf die gennannte Einhakungsplatte (3) der oberen Form (C2) senkrechte, sich jeweils annähernde und entfernende Bewegung verleihen,
**dadurch gekennzeichnet, dass**
- Jedes der genannten Module (M) oben und senkrecht zu einer eigenen oberen Platte (1) eines Steck-Bauteils (2) von mindestens einer mechanischen Ein- und Ausrückvorrichtung vorgesehen ist, deren zusätzliches und beispielsweise hohles Bauteil (17) auf einer Einhakungsplatte (3) der genannten oberen Form (C2) vorgesehen ist, welche jeweils darunter eingehakt die einzelnen Module (M) trägt, die mit Zwangsausrichtungselementen (15, 25) zur richtigen Ausrichtung der genannten Module (M) in Bezug auf die Einhakungsplatte und die genannten Formen (C1, C2) versehen sind;
- Die genannte obere Platte (1) jedes Moduls (M) und die genannte Einhakungsplatte (3) zusätzliche Teile (13, 26) einer mehrpoligen elektrischen Verbindung des Typs Steckanschluss und Steckdose tragen, welche senkrecht zu den genannten Platten (1, 3) und verbunden mit den Netzanschluss- und elektrischen Steuerelementen der Abdichtungseinheit (10, 11) jedes Moduls (M) sind;
- Einige Ver- und Entriegelungselemente (20, 20', 22, 23')an mindestens einer der genannten Platten (1, 3) vorgesehen sind, um mit den genannten zusätzlichen mechanischen Einrastelementen (2, 17) zu kooperieren;
- Schließlich eine Schablone (36, 36') vorgesehen ist, um mit den Zwangsausrichtungselementen in einen der leeren Sitze (S) der unteren Form (C1) montiert zu werden, und diese genannte Schablone mit Elementen zur Durchführung der jeweiligen Verhakung oder Freigabe des Moduls (M) mit beziehungsweise von der genannten Einhakungsplatte (3) ausgestattet und mit Elementen für die Einbeziehungsweise Ausschaltung der genannten Ver- und Entriegelungselemente (20, 20', 22, 22', 23) ausgerüstet ist, wobei die Anhebungs- und Senkungsbewegung der unteren Form (C1) mit der genannten Schablone (36, 36') genutzt wird,
und wobei:
die obere Platte (1) jedes Moduls (M) fest am oberen Teil und senkrecht jeweils einen Schaft (2) zylindrischer Form mit runder Basis trägt, welcher mit einem Kegelstumpfkopf (102) und mit abgerundeten Kanten endet und welcher seitlich in gegenüberliegenden Stellungen mit geradlinigen Rillen (4, 4') versehen ist, wobei vorgesehen ist, dass die Einhakungsplatte (3) für jedes Modul mit einer Öffnung (17) versehen ist, und zwar mit einem solchen Durchmesser, dass sie mit ziemlicher Genauigkeit von dem genannten zylindrischen Schaft (2) des Moduls (M) durchquert werden kann, und so, dass bei erfolgreichem Eintreten des Schafts (2) in die Öffnung (17) die Seitenrillen (4, 4') des selben Schafts von der oberen Fläche der Einhakungsplatte (3) vorstehen würden, auf der sich Schwenkhebel (20, 20') befinden, die jeweils durch entsprechende Elemente (18, 18') geführt und durch eine Feder (23) zum Schließen gedrängt werden, welche die genannten Hebel dazu veranlasst, mit einem Teil ihrer inneren Seiten innerhalb der genannten Öffnung (17) vorzustehen, so dass, wenn der genannte Schaft (2) des Moduls (M) in die genannte Öffnung eingerastet und erhoben ist, das kegelförmige Ende (102) des genannten Schafts progressiv zwischen die genannten Hebel (20, 20') treten und sie trennen würde, bis sie zur Zusammenarbeit mit dem zylindrischen Teil des selben Schafts (2) gebracht werden, und wenn die Seitenrillen (4, 4') des genannten Schafts die Höhe der Hebel (20, 20') erreichen, die letzteren die die genannten Rillen (4, 4') einschnappen, wobei sie das Modul (M) unter der Einhakungsplatte (3) fest verankern.

2. Eine Vorrichtung gemäß Anspruch 1, ausgerüstet mit Elektrizität und Signalschaltungen, welche mit der Abdichtungseinheit (10, 11) jedes Moduls (M) verbunden sind, die in Verbindung mit dem Ersatz jedes Moduls (M) jeweils geöffnet und geschlossen werden müssen, **dadurch gekennzeichnet, dass** die genannten Schaltungen an entgegengesetzten elektrischen Anschlusselementen (13, 26) anliegen, die senkrecht gerichtet sind und ebenfalls auf der oberen Platte (1) der Module (M) und der genannten Einhakungsplatte (3) angeordnet sind, und zwar alle in einer solchen Weise, dass während die jeweiligen Einhakungs- und Freigabevorgänge eines Moduls (M) gleichzeitig stattfinden, ebenfalls die Schließ- und Öffnungsvorgänge der genannten elektrischen Schaltungen durchgeführt werden, so dass all diese Abläufe durch die Verwendung der unteren Form (C1) und der entsprechenden Anhebungs- und Senkungselemente problemlos vereinheitlicht, mechanisiert und automatisiert werden können.

3. Eine Vorrichtung gemäß Anspruch 1, wobei in dem genannten mechanischen Einrastschaft (2) jeweils entsprechende Führungselemente (5-9) vorgesehen sind, ebenso wie die gegenwirkende Feder (12) für die Abdichtungseinheit (10, 11) jedes Moduls (M), und an der Platte (110) der genannten Abdichtungseinheit ein verdrehsicherer Zapfen (15) senkrecht einteilig ist, welcher durch einen Schlitz (215) läuft, der auf der oberen Platte (1) des Moduls (M) vorgesehen ist und der senkrecht von letzterem vorsteht, um in der Lage zu sein, entfernbar in einen entsprechenden Sitz (25) der Einhakungsplatte (3) einzurücken, damit auch die Umdrehung jedes Moduls (M) um die Achse der mechanischen Einrastvorrichtung (2, 17, 20, 20') verhinder wird, die das Modul selbst jeweils an der Einhakungsplatte (3) befestigt.

4. Eine Vorrichtung gemäß Anspruch 1, wobei die genannte Schablone (36, 36') die Form eines Parallelepipeds und umgekehrten Kastens aufweist, hergestellt aus einem beliebigen Duroplast-Kunststoffmaterial und ausgestattet mit einer flachen oberen Wand (136), auf der der untere Teil eines Moduls (M) ruhen soll, und rundherum umgeben von einer Reliefkante (236) zur Aufnahme des selben Moduls (M), wobei die Schablone selbst mit bequemen Seitengriffen (37) ausgerüstet ist, welche jeweils mit nach unten gerichteten entsprechenden Ausdehnungen (336) ihrer eigenen Seitenwände versehen sind, mit denen sie in den Umfang des Sitzes (S) der unteren Form (C1) einrastet, um darin die Schablone (36) selbst richtig zu zentrieren, die mit eigenen Eckenabschnitten (436) auf der oberen Seite der Platte (38) mit den Sitzen (S) der unteren Form (C1) ruht, welche auf diese Weise die mechanische Halterungsfunktion der Schablone (36, 36') übernimmt, wobei an einem der genannten Eckabschnitte (436) der Schablone ein vorstehender senkrechter Zapfen (39) vorgesehen ist, der in eine entsprechende Öffnung (40) einrastet, die nur an einem der Abschnitte vorgesehen ist, mit denen die genannte Platte (38) die Eckbereiche der Schablone (36) selbst trägt, so dass letztere sich als an der unteren Form (C1) angeordnet erweist, mit einer erzwungenen und nützlichen Ausrichtung zur ordnungsgemäßen Zusammenarbeit mit einem Modul (M), und zwar jeweils sowohl beim Einhakungs- wie beim Freigabeschritt an beziehungsweise von der genannten Einhakungsplatte (3) der oberen Form (C2).

5. Eine Vorrichtung gemäß Anspruch 4, wobei die Schablone (36, 36') jeweils seitlich vorgesehen ist, und zwar beispielsweise auf der Hälfte von einer ihrer Seiten, mit einer ersten Platte (41, 41'), welche sich oberhalb der Spitze (136, 236) der Schablone selbst erstreckt und die offen am oberen Teil einen senkrechten und mittleren Schlitz (42, 42') aufweist, in den ein Seitenbezugsansatz (16) des Moduls (M) eingesetzt ist, um jeweils eingehakt beziehungsweise freigegeben zu werden, wobei vorgesehen ist, dass die Schablone gegenüberliegend und parallel zu der genannten ersten Platte (41, 41') seitlich befestigt eine zweite rechteckige und vorstehende Platte (43) trägt, welche zwei nach oben offene Schlitze (44) aufweist, in denen ein entsprechendes Paar (116, 216) Seitenbezugsansätze (116, 216) des selben Moduls (M) eingerückt sind, das auf diese Weise in Bezug auf die Schablone (36, 36') und in Bezug auf die Einhakungsplatte (3) der oberen Form (C2) richtig ausgerichtet wird.

6. Eine Vorrichtung gemäß Anspruch 5, wobei die Schablone (36), welche zur Freigabe des Moduls (M) benutzt wird, jeweils eine erste Seitenplatte (41) aufweist, die höher als die genannte zweite Platte (43) ist und die selbe erste Platte oben mit schrägen Seiten (141) versehen ist, welche geeignet sind, mit entsprechenden Endausdehnungen (22, 22') der genannten Hebel (20, 20') zu kooperieren, die sich an der Einhakungsplatte (33) befinden, um die mechanische Einrastvorrichtung (2, 17) jedes Moduls zu verriegeln und die gegenseitige Trennung der genannten Hebel (20, 20') im Gegensatz zu der Wirkung der entsprechende Schließfeder (23) zu veranlassen, bei sich daraus ergebendem Austritt der genannten Hebel aus den Seitenschlitzen (4, 4') des Schafts (2) des Moduls und der daraus folgenden Freigabe des selben Moduls (M), welches durch das Fallen auf den nahen Spitzenpunkt (136) der Schablone (36) die genannten Schlitze (4, 4') absenkt, so dass wenn die untere Form (C1) mit der Schablone mit dem freigegebenen Modul (M) herunterfährt und die genannten Hebel (20, 20') sich allmählich schließen, die genannten Hebel jeweils über den zylindrischen Abschnitt und dann über den konischen Abschnitt (102) des Schafts gleiten, wobei sie zu der vorstehenden Stellung innerhalb der Öffnung (17) der Einhakungsplatte (3) zurückkehren, welche nützlich für den Einschnappvorgang mit dem neuen zu verhakenden Modul (M) ist.

7. Eine Vorrichtung gemäß einem oder mehreren der vorausgegangenen Ansprüche, **dadurch gekennzeichnet, dass** sie jeweils Sensoren oder Mikroschalter sowie eine entsprechende elektrische und/oder elektronische Schaltung umfasst, um sicherzustellen, dass im Fall einer Nichtentsprechung mit dem Richtungsprotokoll der Schablone (36, 36') auf der unteren Form (C1) und des Moduls (M, M') auf der selben Schablone, die Bewegung der unteren Form (C2) automatisch gestoppt wird und entsprechende akustische und/oder visuelle Signale abgegeben werden, um die Art der eingetretenen Störung anzuzeigen.

8. Eine Vorrichtung gemäß Anspruch 2, wobei der Steckanschluss (13) und die Steckdose (26) der genannten senkrechten Kupplung jeweils mit entsprechenden Isolierkörpern (113, 126) ausgestattet sind, welche die entsprechenden senkrechten Fenster (14, 27) durchqueren, die an der oberen Platte (1) des Moduls (M) und auf der Einhakungsplatte (3) vorgesehen sind, und die genannten Isolierkörper (11, 126) jeweils mit einer entsprechenden Basiserweiterung (113', 126') versehen sind, welche jeweils anliegend unter der oberen Platte (1) und über der genannten Einhakungsplatte (3) gehalten werden, und zwar durch Treibschrauben (45, 45') und entsprechende gegenwirkende Federn (46, 46'), deren Schubkraft größer als die Kupplungsreibung der vorliegenden elektrischen Kupplung (13, 26) ist, das Ganze in einer solchen Weise, dass wenn die obere Platte (1) eines Moduls (M) gegen die Einhakungsplatte (3) angehoben wird, die Stecker (213) in die entsprechenden Buchsen (226) der elektrischen Kupplung passen und die vorstehenden Teile der Isolierkörper (113, 126) der genannten Kupplung sich gegenseitig berühren und ihre Basis (113', 126') von den Platten (1, 3) weg stoßen, wobei sie einen Freiraum (G'") mit einer solchen Weite bilden, dass sie den Freiraum (G") ausgleichen, der zwischen den Platten selbst (1, 3) während des Betriebszyklus des Moduls (M) entsteht und der durch die Freiräume (G, G') gebildet wird, welche zwischen den genannten Einhakungshebeln (20, 20') und den entsprechenden Schlitzen (4, 4') des Schafts (2) bestehen, in die die genannten Hebel einrasten, so dass die genannten Isolierkörper (113, 126) während des Betriebszyklus selbst des Moduls (M) sich durch entsprechende Öffnungen (14, 27) bewegen, welche immer miteinander in Kontakt bleiben, und zwar ohne axiale Bewegungen zwischen den Steckanschlüssen (213) und den entsprechenden Steckdosenbuchsen (226).

## Revendications

1. Appareil pour le remplacement mécanisé des modules d'étanchéité et de coupe (M) dans la station de scellement hermétique de machines pour le conditionnement de produits dans des plateaux, ledit appareil comprenant un moule inférieur (C1) avec des sièges (S) pour le support des bords des plateaux avec un produit et qui, par le biais de moyens de mouvement, est soulevé et abaissé verticalement de manière cyclique par rapport à un moule supérieur (C2) qui supporte dans la partie inférieure lesdits modules (M) par le biais de moyens d'accrochage et de libération de manière que lesdits modules (M) puissent être enlevés et remplacés d'une manière sélective, dans lequel lesdits moyens d'accrochage et de libération des modules (M) sont munis, entre la plaque supérieure (1) de chaque module (M) et la plaque d'accrochage respective (3) du moule supérieur (C2), de moyens d'engagement mécanique complémentaires (2, 17) d'un tel type et orientés d'une telle manière qu'ils soient accouplés et désaccouplés individuellement et/ou simultanément, en imprimant à chaque dit module (M) un mouvement vertical de rapprochement et de séparation par rapport à ladite plaque d'accrochage (3) du moule supérieur (C2),
**caractérisé en ce que** :
- chaque dit module (M) est muni au sommet et perpendiculairement à une propre plaque supérieure (1) d'un composant, tel que mâle, (2) d'au moins un engagement mécanique dont un composant (17), complémentaire et par exemple femelle, est disposé sur une plaque d'accrochage (3) dudit moule supérieur (C2) qui porte, accrochés au-dessous, les divers modules (M), étant muni de moyens d'orientation forcée (15, 25) pour orienter correctement lesdits modules (M) par rapport à la plaque d'accrochage et auxdits moules (C1, C2) ;
- ladite plaque supérieure (1) de chaque module (M) et ladite plaque d'accrochage (3) portent des parties complémentaires (13, 26) de couplage électrique multipolaire, du type fiche et prise, perpendiculaires auxdites plaques (1, 3) et connectées aux moyens d'alimentation électrique et de commande électrique de l'unité d'étanchéité (10, 11) de chaque module (M) ;
- plusieurs moyens de verrouillage et déverrouillage (20, 20', 22, 22', 23) sont disposés sur au moins une desdites plaques (1, 3) pour coopérer avec lesdites parties d'engagement mécanique complémentaires (2, 17) ;
- un gabarit (36, 36') est finalement prévu pour être monté avec les moyens d'orientation forcée, dans un des sièges vides (S) du moule inférieur (C1) et ledit gabarit est muni de moyens pour effectuer l'accrochage ou la libération d'un module (M) à ou de ladite plaque d'accrochage (3) et est muni de moyens pour activer ou désactiver lesdits moyens de verrouillage et déverrouillage (20, 20', 22, 22', 23) en utilisant le mouvement de montée et descente du moule inférieur (C1) avec ledit gabarit (36, 36'),
et dans lequel :
la plaque supérieure (1) de chaque module (M) porte, solidaire sur la partie supérieure et perpendiculairement, une queue (2) de forme cylindrique, avec une base ronde, qui se termine avec une tête tronconique (102) et avec des bords arrondis et qui est munie latéralement, dans des positions opposées, de rainures rectilignes (4, 4'), étant prévu que la plaque d'accrochage (3) soit munie pour chaque module d'un trou (17) de diamètre adapté pour être traversé avec une bonne précision par ladite queue cylindrique (2) du module (M) et de manière que, avec l'entrée réussie de la queue (2) dans le trou (17), les rainures latérales (4, 4') de cette même queue fassent saillie à partir de la face supérieure de la plaque d'accrochage (3) sur laquelle des leviers sont pivotés (20, 20') guidés par des moyens (18, 18', 24) et poussés en fermeture par un ressort (23) qui amène lesdits leviers à faire saillie avec une partie de leurs côtés intérieurs, à l'intérieur dudit trou (17), de manière que, quand ladite queue (2) du module (M) est engagée et soulevée dans ledit trou, l'extrémité conique (102) de ladite queue pénètre progressivement entre lesdits leviers (20, 20') en les séparant jusqu'à les amener à coopérer avec la partie cylindrique de cette même queue (2) et, quand lesdites rainures latérales (4, 4') de ladite queue atteignent la hauteur des leviers (20, 20'), ces derniers pénètrent par enclenchement dans les rainures (4, 4') en fixant fermement le module (M) sous la plaque d'accrochage (3).

2. Appareil selon la revendication 1, équipé de circuits d'alimentation électrique et de signal connectés à l'unité d'étanchéité (10, 11) de chaque module (M), qui doit être ouverte et fermée en relation avec le remplacement de chaque module (M), **caractérisé en ce que** lesdits circuits viennent en butée contre des moyens de couplage électrique supplémentaires (13, 26), orientés verticalement et également agencés sur la plaque supérieure (1) des modules (M) et sur ladite plaque d'accrochage (3), tous de telle manière que, alors que les opérations d'accrochage et de libération d'un module (M) sont exécutées simultanément, les opérations de fermeture et d'ouverture desdits circuits électriques soient également exécutées, et de manière que toutes ces opérations puissent être aisément unifiées, mécanisées et automatisées, à l'aide du moule inférieur (C1) et des moyens respectifs de montée et de descente.

3. Appareil selon la revendication 1, dans lequel à l'intérieur de ladite queue d'engagement mécanique (2) sont également disposés des moyens de guidage (5-9) ainsi que le ressort antagoniste (12) pour l'ensemble d'étanchéité (10, 11) de chaque module (M) et une goupille anti-rotation (15) est solidaire perpendiculairement sur la plaque (110) dudit ensemble d'étanchéité, laquelle passe à travers une fente (215) présente sur la plaque supérieure (1) du module (M) et laquelle fait saillie perpendiculairement à partir de celle-ci pour être en mesure de s'engager de manière amovible dans un siège correspondant (25) de la plaque d'accrochage (3) pour empêcher également la rotation de chaque module (M) autour de l'axe de l'engagement mécanique (2, 17, 20, 20') qui fixe le module lui-même à la plaque d'accrochage (3).

4. Appareil selon la revendication 1, dans lequel ledit gabarit (36, 36') a la forme d'une boîte parallélépipède et renversée, réalisée avec n'importe quel matériau plastique thermodurcissable, munie d'une paroi supérieure plate (136) sur laquelle est destinée à s'appuyer la partie inférieure d'un module (M) et entourée de manière périphérique par un bord en relief (236) pour contenir le même module (M), le même gabarit étant muni de poignées de préhension latérales confortables (37), étant muni de prolongements vers le bas (336) de ses propres parois, avec lesquelles il engage le périmètre du siège (S) du moule inférieur (C1) pour centrer correctement dedans le même gabarit (36) qui s'appuie avec ses propres portions de coin (436) sur la face supérieure de la plaque (38) avec les sièges (S) du moule inférieur (C1), qui remplit de cette manière la fonction de support mécanique du gabarit (36, 36'), étant prévue sur une desdites portions de coin (436) du gabarit une goupille verticale saillante (39) qui engage un trou (40) prévu seulement sur une des portions avec lesquelles ladite plaque (38) supporte les zones de coin du même gabarit (36), de manière que ce dernier s'avère agencé sur le moule inférieur (C1) avec une orientation forcée et utile pour coopérer correctement avec un module (M) à la fois dans l'étape d'accrochage et dans celle de libération à ou de ladite plaque d'accrochage (3) du moule supérieur (C2).

5. Appareil selon la revendication 4, dans lequel le gabarit (36, 36') est muni latéralement, par exemple sur la moitié d'un de ses côtés, d'une première plaque (41, 41') qui s'étend au-dessus du sommet (136, 236) du même gabarit et qui porte une reinure verticale et médiane (42, 42') ouverte sur la partie supérieure, dans laquelle une référence latérale (16) du module (M) est insérée pour être accrochée ou libérée, étant prévu que, en opposition et en parallèle à ladite première plaque (41, 41'), le gabarit (36, 36') porte fixée latéralement une deuxième plaque rectangulaire et saillante (43) qui comporte deux reinures ouvertes vers le haut (44) dans lesquelles est engagée une paire correspondante de références latérales (116, 216) du même module (M) qui est ainsi correctement orienté par rapport au gabarit (36, 36') et par rapport à la plaque d'accrochage (3) du moule supérieur (C2).

6. Appareil selon la revendication 5, dans lequel le gabarit (36) utilisé pour libérer un module (M) a la première plaque latérale (41) plus haute que ladite deuxième plaque (43) et cette même première plaque est munie au sommet de côtés obliques (141) adaptés pour coopérer avec des extensions terminales (22, 22') desdits leviers (20, 20') opérant sur la plaque d'accrochage (3) pour verrouiller l'engagement mécanique (2, 17) de chaque module, pour déterminer la séparation mutuelle desdits leviers (20, 20') en contraste avec l'action du ressort de fermeture respectif (23), avec la sortie résultante desdits leviers hors des fentes latérales (4, 4') de la queue (2) du module et la libération successive du même module (M) qui, en tombant sur le sommet proche (136) du gabarit (36), abaisse lesdites fentes (4, 4') de manière que, quand le moule inférieur (C1) avec le gabarit descende avec le module libéré (M) et lesdits leviers (20, 20') se ferment progressivement, lesdits leviers coulissent sur la portion cylindrique et ensuite sur la portion conique (102) de la queue, en retournant dans la position saillante dans le trou (17) de la plaque d'accrochage (3), utile pour la coopération par enclenchement avec le nouveau module (M') à accrocher.

7. Appareil selon une ou plusieurs des revendications précédentes, **caractérisé en ce qu'**il comprend des capteurs ou micro-interrupteurs et un circuit électrique et/ou électronique respectif pour garantir que, dans le cas d'une non-conformité avec le protocole d'orientation du gabarit (36, 36') sur le moule inférieur (C1) et du module (M, M') sur le même gabarit, le mouvement du moule inférieur (C2) soit automatiquement arrêté et que des signaux sonores et/ou visuels soient activés pour indiquer le type de dysfonctionnement survenu.

8. Appareil selon la revendication 2, dans lequel la fiche (13) et la prise (26) dudit couplage électrique vertical sont munies de corps isolants respectifs (113, 126) qui traversent les fenêtres verticales respectives (14, 27) prévues sur la plaque supérieure (1) du module (M) et sur la plaque d'accrochage (3) et lesdits corps isolants (113, 126) sont pourvues d'élargissements de base respectifs (113', 126') qui sont respectivement maintenus en butée sous la plaque supérieure (1) et au-dessus de ladite plaque d'accrochage (3), par des vis d'entraînement (45, 45') et par des ressorts antagonistes respectifs (46, 46') dont la force de poussée est supérieure à la friction d'accouplement du couplage électrique (13, 26) en question, le tout de telle manière que, quand la plaque supérieure (1) d'un module (M) est soulevée contre la plaque d'accrochage (3), les fiches (213) s'ajustent dans les douilles correspondantes (226) du couplage électrique et les parties saillantes des corps isolants (113, 126) dudit couplage se touchent entre elles et poussent leurs bases (113'. 126') loin des plaques (1, 3), en formant un espace intermédiaire (G"') d'une largeur telle qu'elle compense l'espace intermédiaire (G") qui est formé entre les mêmes plaques (1, 3) durant le cycle de travail du module (M) et qui dérive des espaces intermédiaires (G, G') existant entre lesdits leviers d'accrochage (20, 20') et les fentes correspondantes (4, 4') de la queue (2) engagées par lesdits leviers, de manière que durant le même cycle de travail du module (M), lesdits corps isolants (113, 126) se déplacent à travers des ouvertures respectives (14, 27) en restant toujours en contact l'un avec l'autre, sans aucun mouvement axial relatif entre le fiches (213) et les douilles de prise respectives (226).
